# EUROPEAN PATENT SPECIFICATION

(11) **EP 3 503 470 B1**
(45) Date of publication and mention of the grant of the patent: **15.11.2023**
(21) Application number: 17210211.3
(22) Date of filing: 22.12.2017
(51) Int. Cl.: H04W 24/00, H04L 41/40, H04L 41/5041

(54) **DEVICES AND METHOD FOR PROVIDING A SERVICE IN A MOBILE COMMUNICATION NETWORK**
VORRICHTUNGEN UND VERFAHREN ZUR BEREITSTELLUNG EINES DIENSTES IN EINEM KOMMUNIKATIONSNETZWERK
DISPOSITIFS ET PROCÉDÉ POUR FOURNIR UN SERVICE DANS UN RÉSEAU DE COMMUNICATION MOBILE

(43) Date of publication of application: 26.06.2019
(73) Proprietor: Deutsche Telekom AG, 53113 Bonn (DE)
(72) Inventor: Nenner, Karl-Heinz, 53332 Bornheim (DE)
(74) Representative: Vossius & Partner Patentanwälte Rechtsanwälte mbB

(56) References cited:
- WO-A1-2009/141000
- WO-A1-2016/102297
- US-A1- 2016 353 268

## Description

### TECHNICAL FIELD

In general, the present invention relates to mobile communication networks. More specifically, the present invention relates to devices and methods for providing a service in a mobile communication network, in particular a 5G mobile communication network.

### BACKGROUND

In current mobile communication networks, i.e. 4G LTE systems, the core network generally has a static architecture. Control plane network functions and data plane (also referred to as user plane) network functions are provided by the fixed network elements of the core network, such as a Mobility Management Entity (MME), a Serving Gateway (SGW), a PDN Gateway (PGW) and the like. These network elements serve all the network traffic that passes through the Evolved Packet Core (EPC) regardless of the type of services associated with the network traffic.

In comparison to 4G mobile communication systems, the future 5th Generation mobile technology (5G) will support use cases with an enormous variety of performance attributes, for instance, ultra-reliable communication for mission critical services, eHealth, public safety, real-time vehicle control, tactile Internet, connectivity for drones, and the like. To support services with such a diverse range of requirements, network slices and logical network functions are expected to be among the key building blocks of 5G networks.

Generally, a network slice is implemented on the physical network resources, such as servers, routers, base stations and the like, of a mobile communication network and composed of a collection of logical network functions that support the communication services for particular use cases. These logical network functions are usually implemented in a control plane of a network slice and can be considered to run on one or more virtual machines providing the network slice. In contrast to traditional core networks, which have been designed as a single network architecture supporting a maximum level of connectivity and providing multiple services, network slicing allows networks to be logically separated with each network slice providing customized connectivity, and all network slices can share the same functional components. Network slicing thus significantly increases flexibility and dynamicity of the core network and allows, for instance, implementing an access-agnostic core. Thus, network slicing will be one of the main features for 5G developments.

The network functions implemented in a mobile communication network can have different tasks, i.e. provide different services, such as Authentication, Authority & Accounting (AAA) management, mobility management, session management, security management, and the like. For providing a new service in a mobile communication network, usually, either a new network function would have to be created and implemented in the mobile communication network or significant changes would have to be made to an existing network function, which can be costly both in terms of resources and time.

WO2016/102297 discloses a method for controlling on-demand service provisioning in a network, wherein the network comprises resources for providing a service. In the method, a service request is intercepted. At least one network function, indicated as a first network function, required for the service associated with the service request is determined. Then, the first network function is instantiated on a resource in the network for executing the service in the network.

WO2009/141000 discloses a method of correlating a plurality of service instances by a service composition entity, wherein the services are performed by one or a plurality of servers of a telecommunications network. The service composition entity performs the steps of invoking a composite service instance corresponding to the service request, generating a composite service identifier identifying this composite service instance, and contacting the one or a plurality of application servers for invoking the plurality of component service instances, wherein the plurality of component service instances are associated to the composite service instance.

US2016/353268 discloses a method and system for responding to demand-based charging in a communication network, such as a 5G wireless communication network. Service providers and/or infrastructure providers adjust network usage pricing dynamically based on demand. Customers such as virtual network operators respond to pricing adjustments by adjusting their network usage, service requirements, and/or by re-negotiating the pricing structure. Network usage can be adjusted by controlling network traffic generated in response to activity of end-user devices of the virtual network.

In light of the above, there is a need for improved devices and methods for providing a service in a mobile communication network.

### SUMMARY

It is an object of the invention to provide improved devices and methods for providing a service in a mobile communication network, in particular a 5G mobile communication network.

The foregoing and other objects are achieved by the subject matter of the independent claims. Further implementation forms are apparent from the dependent claims, the description and the figures.

According to a first aspect the invention relates to a network entity for providing a service in a mobile communication network, wherein the mobile communication network comprises a plurality of basic network functions. Each basic network function can be considered to providing a basic service or function in the mobile communication network. The network entity is configured as defined by claim 1.

Advantageously, the network entity according to the first aspect allows on the fly service-tailored network function provisioning.

In a further embodiment of the first aspect, the network entity is implemented as one or more servers of the mobile communication network and comprises: a communication interface configured to receive the service request, wherein the service request identifies the service requested by the further network entity of the mobile communication network; and a processor configured to select on the basis of the service request the one or more basic network functions from the plurality of basic network functions and to generate the composite network function on the basis of the selected basic network functions for providing the service requested by the service request.

In a further embodiment of the first aspect, the network entity is configured to extract from the service request the one or more basic network functions to be selected from the plurality of basic network functions.

In a further embodiment of the first aspect, the network entity is further configured to convert the native service request into a generalized markup language or a markup language, such as HTML format, and to extract from the converted service request the one or more basic network functions to be selected from the plurality of basic network functions.

In a further embodiment of the first aspect, the network entity is configured to select the one or more basic network functions from the plurality of basic network functions on the basis of the service request and a set of dependency rules, wherein the set of dependency rules defines dependencies between the plurality of basic network functions.

In a further embodiment of the first aspect, the set of dependency rules is stored in a memory of the network entity.

In a further embodiment of the first aspect, the network entity is configured to extract the set of dependency rules from the service request.

In a further embodiment of the first aspect, for providing the service requested by the service request on the basis of the composite network function the network entity is further configured to route data traffic between the selected basic network functions.

According to a second aspect the invention relates to a mobile communication network comprising a network entity according to the first aspect, a plurality of basic network functions and a further network entity configured to request a service.

In a further embodiment of the second aspect, the further network entity is a user equipment or a base station of the mobile communication network.

In a further embodiment of the second aspect, the network entity is implemented as a network function of the mobile communication network.

In a further embodiment of the second aspect, the mobile communication network comprises a repository and the plurality of basic network functions are stored in the repository.

In a further embodiment of the second aspect, the mobile communication network comprises a plurality of network slices, wherein each network slice comprises a plurality of basic network functions.

According to a third aspect the invention relates to a corresponding method for providing a service in a mobile communication network, wherein the mobile communication network comprises a plurality of basic network functions. The method comprises the steps defined in claim 10.

The method according to the third aspect of the invention is performed by the network entity according to the first aspect of the invention. Further features of the method according to the third aspect of the invention result directly from the functionality of the network entity according to the first aspect of the invention and its different embodiments described above and below.

According to a fourth aspect the invention relates to a computer program product comprising program code for performing the method of the third aspect when executed on a computer. Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a mobile communication network according to an embodiment including a network entity for providing a service in the mobile communication network according to an embodiment;
Fig. 2 shows a schematic diagram illustrating different aspects of a network entity for providing a service in a mobile communication network according to an embodiment;
Fig. 3 shows a schematic diagram illustrating different aspects of a network entity for providing a service in a mobile communication network according to an embodiment; and
Fig. 4 shows a flow diagram illustrating a method of providing a service in a mobile communication network according to an embodiment.

In the various figures, identical reference signs will be used for identical or at least functionally equivalent features.

### DETAILED DESCRIPTION OF EMBODIMENTS

In the following description, reference is made to the accompanying drawings, which form part of the disclosure, and in which are shown, by way of illustration, specific aspects in which the present invention may be placed. It will be appreciated that other aspects may be utilized and structural or logical changes may be made without departing from the scope of the present invention. The following detailed description, therefore, is not to be taken in a limiting sense, as the scope of the present invention is defined by the appended claims.

For instance, it will be appreciated that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims embodiments with different functional blocks or processing units are described, which are connected with each other or exchange signals. It will be appreciated that the present invention covers embodiments as well, which include additional functional blocks or processing units that are arranged between the functional blocks or processing units of the embodiments described below.

Finally, it is understood that the features of the various exemplary aspects described herein may be combined with each other, unless specifically noted otherwise.

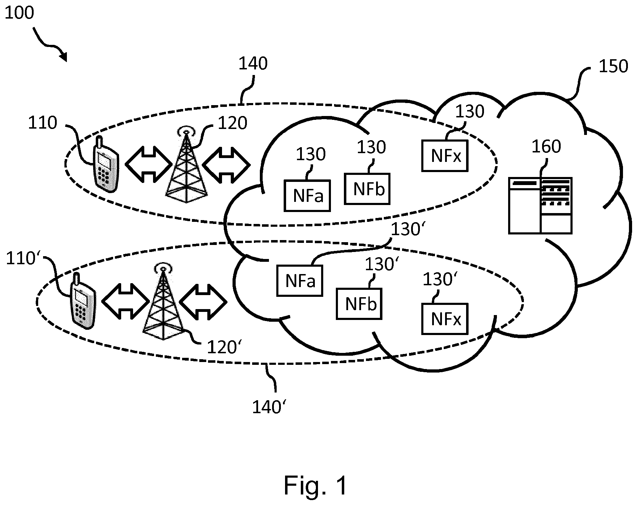

Figure 1 shows a mobile communication network 100 according to an embodiment. In an embodiment, the mobile communication network 100 can be a mobile communication network 100 according to the standard 5G or a standard based thereon supporting virtual network functions and network slices. The mobile communication network 100 comprises a plurality of base stations 120, 120' (e.g. in the form of a plurality of gNB) being part of a radio access network (RAN) of the mobile communication network 100 for providing a plurality of user equipments 110, 110' access to the services provides by a core network 150 of the mobile communication network 100, such as communication services.

In the embodiment shown in figure 1, the mobile communication network 100 comprises a plurality of network slices 140, 140', i.e. logical subnetworks 140, 140' of the mobile communication network 100. In each of the network slices 140, 140' of the mobile communication network 100 a plurality of basic virtual network functions 130, 130' are provided. The network architecture for supporting embodiments of the invention, such as the architecture of the mobile communication network 100 shown in figure 1, may be either realized according to Network Function Virtualization (NFV) and Software Defined Networks (SDN) paradigms or may rely on dedicated hardware appliances or entities. The network slices 140, 140' and/or the plurality of network functions 130, 130' may be built upon virtual and/or physical infrastructures, including wireless Access Points (APs), Data Centers, Edge Data Centers or Points of Presence, interconnected by a transport network realized either by legacy connectivity methods or by virtual links, virtual switches and virtual routers controlled by SDN controllers. To this end, the core network 150 of the mobile communication network 100 can comprise one or more network orchestrators (not shown in figure 1) configured to implement and operate the network slices 140, 140' in the mobile communication network 100.

Furthermore, the mobile communication network 100 shown in figure 1 comprises a network entity 160 for providing a service in the mobile communication network 100. The network entity 160 is configured to receive a service request, wherein the service request identifies a service requested by, for instance, one of the user equipments 110, 110' or one of the base stations 120, 120'. The network entity 160 is further configured to select on the basis of the service request one or more basic network functions from the pool of basic network functions 130, 130' and to generate a composite network function on the basis of the selected basic network functions for providing the service requested by the service request.

In the embodiment shown in figure 1, the network entity 160 can be implemented on one or more servers 160 located in the core network 150 of the mobile communication network 100 and can comprise a communication interface configured to receive the service request, and a processor configured to select on the basis of the service request the one or more basic network functions from the plurality of basic network functions 130, 130' and to generate the composite network function on the basis of the selected basic network functions 130, 130' for providing the service requested by the service request.

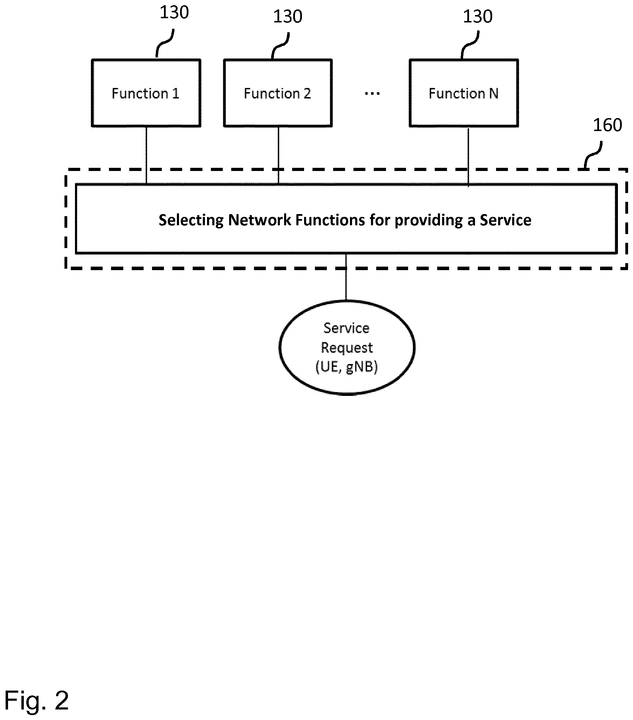

In an embodiment, the network entity 160 is configured to extract from the service request the one or more basic network functions to be selected from the plurality of basic network functions 130, 130', as illustrated in figure 2.

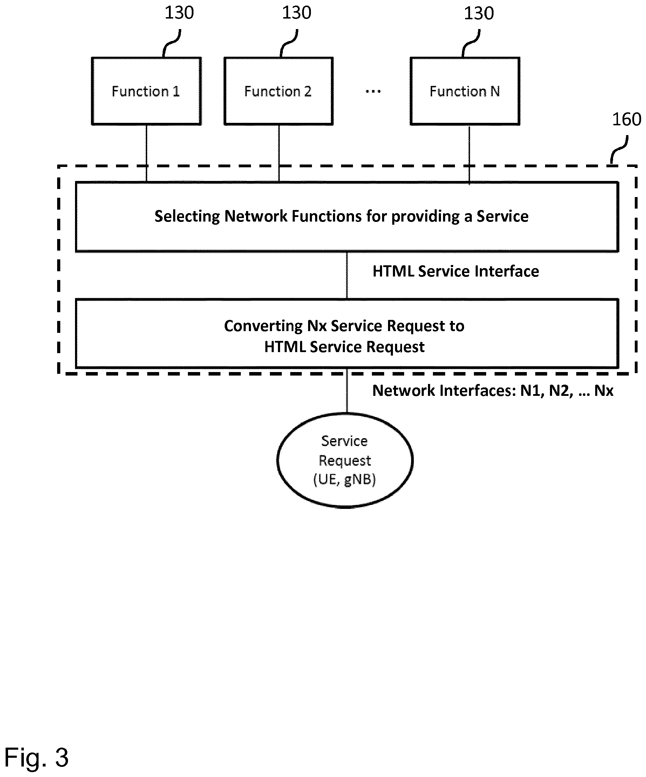

In an embodiment, the network entity 160 is further configured to convert the service request provided by the mobile communication network 100 in a native format into a generalized markup language or a markup language, such as XML, HTML and the like, and to extract the one or more basis network functions to be selected from the plurality of basic network functions 130, 130' from the converted service request. Figure 3 shows an embodiment of the network entity 160, wherein the network entity is configured to convert the original service request into HTML format and to extract from the service request in HTML format the one or more basic network functions to be selected from the plurality of basic network functions 130, 130'.

In an embodiment, the network entity 160 is configured to select the one or more basic network functions from the plurality of basic network functions 130; 130' on the basis of the service request and a set of dependency rules, wherein the set of dependency rules defines dependencies between the plurality of basic network functions 130; 130'. These dependency rules could comprise rules, such as "If network function a is selected, then network function b must be selected as well" or "If network function a is selected, then network function b cannot be selected as well". In an embodiment, the set of dependency rules is stored in a memory of the network entity 160. In an embodiment, the network entity 160 is configured to extract the set of dependency rules from the service request.

In an embodiment, for providing the service requested by the service request on the basis of the composite network function the network entity 160 is further configured to route data traffic between the selected basic network functions 130, 130'. For instance, if for providing the service the network entity 160 selects network functions a and b 130, 130', wherein network function b needs as input the output of network function a, the network entity 160 is configured to process first network function a, route the output data of network function a to network function b and then process network function b using the output data of network function a.

In an embodiment, the network entity 160 itself can be implemented as a network function 160 of the mobile communication network 100.

In an embodiment, the mobile communication network 100 comprises a repository, wherein the plurality of basic network functions 130, 130' are stored in the repository.

In an embodiment, each of the network slices 140, 140' can comprise an own pool of basic network functions 130, 130', which can be different for the different network slices 140, 140'. For instance, a low latency slice 140, 140' can have a different pool of basic network functions than a high data volume slice 140, 140', as different services might be of interest in these slices 140, 140' implemented for different purposes.

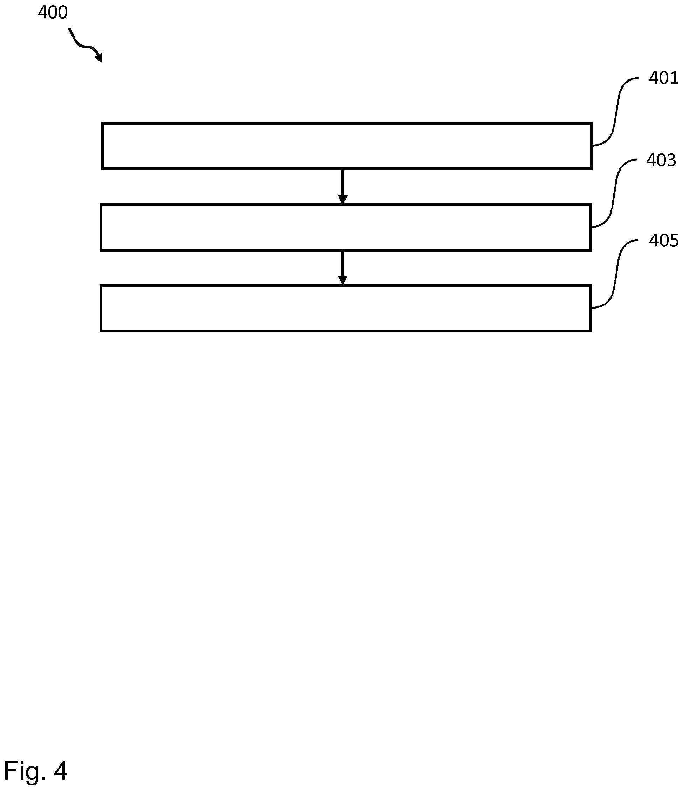

Figure 4 illustrates a flow diagram of a corresponding method 400 for providing a service in the mobile communication network 100. The method 400 comprises the steps of: receiving 401 a service request, wherein the service request identifies a service requested by a further network entity 110, 120 of the mobile communication network 100; selecting 403 on the basis of the service request one or more basic network functions from the plurality of basic network functions 130; 130'; and generating 405 a composite network function on the basis of the selected basic network functions 130 for providing the service requested by the service request.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

## Claims

1. A network entity (160) for providing a service in a mobile communication network (100), the mobile communication network (100) comprising a plurality of basic network functions (130, 130'), wherein the network entity (160) is configured to:
receive a service request, wherein the service request identifies a service requested by a further network entity (110, 120) of the mobile communication network (100);
select on the basis of the service request one or more basic network functions from the plurality of basic network functions (130; 130') by extracting from the service request the one or more basic network functions to be selected from the plurality of basic network functions (130, 130'); and
generate a composite network function on the basis of the selected basic network functions (130) for providing the service requested by the service request,
wherein the network entity (160) is configured to select the one or more basic network functions from the plurality of basic network functions (130; 130') on the basis of the service request and a set of dependency rules, wherein the set of dependency rules defines between the plurality of basic network functions (130; 130'),
wherein the set of dependency rules is stored in a memory of the network entity (160), or
wherein the network entity (160) is configured to extract the set of dependency rules from the service request.

2. The network entity (160) of claim 1, wherein the network entity (160) comprises:
a communication interface configured to receive the service request, wherein the service request identifies the service requested by the further network entity (110, 120) of the mobile communication network (110); and
a processor configured to select on the basis of the service request the one or more basic network functions from the plurality of basic network functions (130, 130') and to generate the composite network function on the basis of the selected basic network functions (130, 130') for providing the service requested by the service request.

3. The network entity (160) of claim 1, wherein the network entity is further configured to convert the service request into a generalized markup language or a markup language and to extract from the converted service request the one or more basic network functions to be selected from the plurality of basic network functions (130, 130').

4. The network entity (160) of any one of the preceding claims, wherein for providing the service requested by the service request on the basis of the composite network function the network entity (160) is further configured to route data traffic between the selected basic network functions (130, 130').

5. A mobile communication network (100) comprising a network entity (160) according to any one of the preceding claims, a plurality of basic network functions and a further network entity (110, 120) configured to request a service.

6. The mobile communication network (100) of claim 5, wherein the further network entity (110, 120) is a user equipment (110) or a base station (120) of the mobile communication network (100).

7. The mobile communication network (100) of claim 5 or 6, wherein the network entity (160) is implemented as a network function (160) of the mobile communication network (100).

8. The mobile communication network (100) of any one of claims 5 to 7, wherein the mobile communication network (100) comprises a repository and wherein the plurality of basic network functions (130, 130') are stored in the repository.

9. The mobile communication network (100) of any one of claims 5 to 8, wherein the mobile communication network (100) comprises a plurality of network slices (140, 140), wherein each network slice (140, 140') comprises a plurality of basic network functions (130, 130').

10. A method (400) for providing a service in a mobile communication network (100), the mobile communication network (100) comprising a plurality of basic network functions (130, 130'), wherein the method (400) is performed by a network entity (160) and comprises:
receiving (401) a service request, wherein the service request identifies a service requested by a further network entity (110, 120) of the mobile communication network (100);
selecting (403) on the basis of the service request one or more basic network functions from the plurality of basic network functions (130; 130') by extracting from the service request the one or more basic network functions to be selected from the plurality of basic network functions (130, 130'); and
generating (405) a composite network function on the basis of the selected basic network functions (130) for providing the service requested by the service request,
wherein selecting the one or more basic network functions from the plurality of basic network functions (130; 130') is on the basis of the service request and a set of dependency rules, wherein the set of dependency rules defines dependencies between the plurality of basic network functions (130; 130'),
wherein the set of dependency rules is stored in a memory of the network entity, or
wherein the network entity extracts the set of dependency rules from the service request.

11. A computer program product comprising program code for performing the method (400) of claim 10 when executed on a computer or a processor.

## Patentansprüche

1. Netzwerkeinheit (160) zum Bereitstellen eines Dienstes in einem Mobilkommunikationsnetzwerk (100), wobei das Mobilkommunikationsnetzwerk (100) mehrere grundlegende Netzwerkfunktionen (130, 130') aufweist, wobei die Netzwerkeinheit (160) konfiguriert ist:
eine Dienstanforderung zu empfangen, wobei die Dienstanforderung einen Dienst identifiziert, der von einer weiteren Netzwerkeinheit (110, 120) des Mobilkommunikationsnetzwerks (100) angefordert wird;
auf der Grundlage der Dienstanforderung eine oder mehrere grundlegende Netzwerkfunktionen aus den mehreren grundlegenden Netzwerkfunktionen (130; 130') auszuwählen, indem aus der Dienstanforderung die eine oder mehreren grundlegenden Netzwerkfunktionen extrahiert werden, die aus den mehreren grundlegenden Netzwerkfunktionen (130, 130') ausgewählt werden sollen; und
eine zusammengesetzte Netzwerkfunktion auf der Grundlage der ausgewählten grundlegenden Netzwerkfunktionen (130) zu erzeugen, um den durch die Dienstanforderung angeforderten Dienst bereitzustellen,
wobei die Netzwerkeinheit (160) konfiguriert ist, die eine oder mehrere grundlegende Netzwerkfunktionen aus den mehreren grundlegenden Netzwerkfunktionen (130; 130') auf der Grundlage der Dienstanforderung und eines Satzes von Abhängigkeitsregeln auszuwählen, wobei der Satz von Abhängigkeitsregeln Abhängigkeiten zwischen den mehreren grundlegenden Netzwerkfunktionen (130; 130') definiert,
wobei der Satz von Abhängigkeitsregeln in einem Speicher der Netzwerkeinheit (160) gespeichert ist, oder
wobei die Netzwerkeinheit (160) konfiguriert ist, den Satz von Abhängigkeitsregeln aus der Dienstanforderung zu extrahieren.

2. Netzwerkeinheit (160) nach Anspruch 1, wobei die Netzwerkeinheit (160) aufweist:
eine Kommunikationsschnittstelle, die konfiguriert ist, die Dienstanforderung zu empfangen, wobei die Dienstanforderung den von der weiteren Netzwerkeinheit (110, 120) des Mobilkommunikationsnetzwerks (110) angeforderten Dienst identifiziert; und einen Prozessor, der konfiguriert ist, auf der Grundlage der Dienstanforderung die eine oder mehrere grundlegender Netzwerkfunktionen aus den mehreren grundlegenden Netzwerkfunktionen (130, 130') auszuwählen und die zusammengesetzte Netzwerkfunktion auf der Grundlage der ausgewählten grundlegender Netzwerkfunktionen (130, 130') zu erzeugen, um den durch die Dienstanforderung angeforderten Dienst bereitzustellen.

3. Netzwerkeinheit (160) nach Anspruch 1, wobei die Netzwerkeinheit ferner konfiguriert ist:
die Dienstanforderung in eine verallgemeinerte Auszeichnungssprache oder eine Auszeichnungssprache umzuwandeln und aus der umgewandelten Dienstanforderung die eine oder die mehreren grundlegenden Netzwerkfunktionen zu extrahieren, die aus den mehreren grundlegenden Netzwerkfunktionen (130, 130') auszuwählen sind.

4. Netzwerkeinheit (160) nach einem der vorhergehenden Ansprüche, wobei die Netzwerkeinheit (160) zum Bereitstellen des durch die Dienstanforderung angeforderten Dienstes auf der Grundlage der zusammengesetzten Netzwerkfunktion ferner konfiguriert ist, den Datenverkehr zwischen den ausgewählten grundlegenden Netzwerkfunktionen (130, 130') zu leiten.

5. Mobilkommunikationsnetzwerk (100), das eine Netzwerkeinheit (160) nach einem der vorangehenden Ansprüche, mehrere grundlegende Netzwerkfunktionen und eine weitere Netzwerkeinheit (110, 120) aufweist, die konfiguriert ist, einen Dienst anzufordern.

6. Mobilkommunikationsnetzwerk (100) nach Anspruch 5, wobei die weitere Netzwerkeinheit (110, 120) ein Benutzergerät (110) oder eine Basisstation (120) des Mobilkommunikationsnetzwerks (100) ist.

7. Mobilkommunikationsnetzwerk (100) nach Anspruch 5 oder 6, wobei die Netzwerkeinheit (160) als eine Netzwerkfunktion (160) des Mobilkommunikationsnetzwerks (100) implementiert ist.

8. Mobilkommunikationsnetzwerk (100) nach einem der Ansprüche 5 bis 7, wobei das Mobilkommunikationsnetzwerk (100) ein Repository aufweist und wobei die mehreren grundlegenden Netzwerkfunktionen (130, 130') in dem Repository gespeichert sind.

9. Mobilkommunikationsnetzwerk (100) nach einem der Ansprüche 5 bis 8, wobei das Mobilkommunikationsnetzwerk (100) mehrere Netzwerk-Slices (140, 140) aufweist, wobei jedes Netzwerk-Slice (140, 140') mehrere grundlegende Netzwerkfunktionen (130, 130') aufweist.

10. Verfahren (400) zum Bereitstellen eines Dienstes in einem Mobilkommunikationsnetzwerk (100), wobei das Mobilkommunikationsnetzwerk (100) mehrere grundlegende Netzwerkfunktionen (130, 130') aufweist, wobei das Verfahren (400) von einer Netzwerkeinheit (160) durchgeführt wird und aufweist:
Empfangen (401) einer Dienstanforderung, wobei die Dienstanforderung einen von einer weiteren Netzwerkeinheit (110, 120) des Mobilkommunikationsnetzwerks (100) angeforderten Dienst identifiziert;
Auswählen (403) auf der Grundlage der Dienstanforderung einer oder mehrerer grundlegender Netzwerkfunktionen aus den mehreren grundlegenden Netzwerkfunktionen (130; 130'), indem aus der Dienstanforderung die eine oder mehreren grundlegenden Netzwerkfunktionen extrahiert werden, die aus den mehreren grundlegenden Netzwerkfunktionen (130, 130') ausgewählt werden sollen; und
Erzeugen (405) einer zusammengesetzten Netzwerkfunktion auf der Grundlage der ausgewählten grundlegenden Netzwerkfunktionen (130), um den durch die Dienstanforderung angeforderten Dienst bereitzustellen,
wobei das Auswählen der einen oder mehreren grundlegenden Netzwerkfunktionen aus den mehreren grundlegenden Netzwerkfunktionen (130; 130') auf der Grundlage der Dienstanforderung und eines Satzes von Abhängigkeitsregeln erfolgt, wobei der Satz von Abhängigkeitsregeln Abhängigkeiten zwischen den mehreren grundlegenden Netzwerkfunktionen (130; 130') definiert,
wobei der Satz von Abhängigkeitsregeln in einem Speicher der Netzwerkeinheit gespeichert ist, oder
wobei die Netzwerkeinheit den Satz von Abhängigkeitsregeln aus der Dienstanforderung extrahiert.

11. Computerprogrammprodukt, das Programmcode zu, Durchführen des Verfahrens (400) nach Anspruch 10 aufweist, wenn es auf einem Computer oder einem Prozessor ausgeführt wird.

## Revendications

1. Entité de réseau (160) pour fournir un service dans un réseau de communication mobile (100), le réseau de communication mobile (100) comprenant une pluralité de fonctions de réseau de base (130, 130'), l'entité de réseau (160) étant configurée pour :
recevoir une demande de service, la demande de service identifiant un service requis par une entité de réseau supplémentaire (110, 120) du réseau de communication mobile (100) ;
sélectionner sur la base de la demande de service une ou plusieurs fonctions de réseau de base parmi la pluralité de fonctions de réseau de base (130 ; 130') en extrayant de la demande de service la ou les fonctions de réseau de base à sélectionner parmi la pluralité de fonctions de réseau de base (130, 130') ; et
générer une fonction de réseau composite sur la base des fonctions de réseau de base (130) sélectionnées pour fournir le service requis par la demande de service,
l'entité de réseau (160) étant configurée de manière à sélectionner la ou les fonctions de réseau de base parmi la pluralité de fonctions de réseau de base (130 ; 130') sur la base de la demande de service et d'une série de règles de dépendance, la série de règles de dépendance définit entre la pluralité de fonctions de réseau de base (130 ; 130'),
la série de règles de dépendance étant stockée dans une mémoire de l'entité de réseau (160), ou l'entité de réseau (160) étant configurée pour extraire la série de règles de dépendance de la demande de service.

2. Entité de réseau (160) de la revendication 1, l'entité de réseau (160) comprenant :
une interface de communication configurée pour recevoir la demande de service, la demande de service identifiant le service requis par l'entité de réseau supplémentaire (110, 120) du réseau de communication mobile (110) ; et
un processeur configuré pour sélectionner sur la base de la demande de service la ou les fonctions de réseau de base parmi la pluralité de fonctions de réseau de base (130, 130') et pour générer la fonction de réseau composite sur la base des fonctions de réseau de base (130, 130') sélectionnées pour fournir le service requis par la demande de service.

3. Entité de réseau (160) de la revendication 1, l'entité de réseau étant configurée pour convertir la demande de service en un langage de balisage généralisé ou un langage de balisage et pour extraire de la demande de service convertie la ou les fonctions de réseau de base à sélectionner parmi la pluralité de fonctions de réseau de base (130, 130').

4. Entité de réseau (160) de l'une quelconque des revendications précédentes, l'entité de réseau (160) étant en outre configurée pour acheminer le trafic de données entre les fonctions de réseau de base (130, 130') sélectionnées pour fournir le service requis par la demande de service sur la base de la fonction de réseau composite.

5. Réseau de communication mobile (100) comprenant une entité de réseau (160) selon l'une quelconque des revendications précédentes, une pluralité de fonctions de réseau de base et une entité de réseau supplémentaire (110, 120) configurée pour demander un service.

6. Réseau de communication mobile (100) de la revendication 5, l'entité de réseau supplémentaire (110, 120) étant un équipement d'utilisateur (110) ou une station de base (120) du réseau de communication mobile (100).

7. Réseau de communication mobile (100) de la revendication 5 ou 6, l'entité de réseau (160) étant mise en oeuvre en tant que fonction de réseau (160) du réseau de communication mobile (100).

8. Réseau de communication mobile (100) selon l'une quelconque des revendications 5 à 7, le réseau de communication mobile (100) comprenant un référentiel et la pluralité de fonctions de réseau de base (130, 130') étant stockée dans le référentiel.

9. Réseau de communication mobile (100) selon l'une quelconque des revendications 5 à 8, le réseau de communication mobile (100) comprenant une pluralité de tranches de réseau (140, 140), chaque tranche de réseau (140, 140') comprenant une pluralité de fonctions de réseau de base (130, 130').

10. Procédé (400) pour fournir un service dans un réseau de communication mobile (100), le réseau de communication mobile (100) comprenant une pluralité de fonctions de réseau de base (130, 130'), le procédé (400) étant exécuté par une entité de réseau (160) et comprenant les étapes suivantes :
recevoir (401) une demande de service, la demande de service identifiant un service requis par une entité de réseau supplémentaire (110, 120) du réseau de communication mobile (100) ;
sélectionner (403) sur la base de la demande de service la ou les fonctions de réseau de base de la pluralité de fonctions de réseau de base (130 ; 130') en extrayant de la demande de service la ou les fonctions de service de base à sélectionner de la pluralité de fonctions de réseau de base (130, 130') ; et
générer (405) une fonction de réseau composite sur la base des fonctions de réseau de base sélectionnées (130) pour fournir le service requis par la demande de service,
la sélection de la ou des fonctions de réseau de base parmi la pluralité de fonctions de réseau de base (130 ; 130') se faisant sur la base de la demande de service et d'une série de règles de dépendance, la série de règles de dépendance définit les dépendances entre la pluralité de fonctions de réseau de base (130 ; 130'),
la série de règles de dépendance étant stockée dans une mémoire de l'entité de réseau, ou l'entité de réseau extrayant la série de règles de dépendance de la demande de service.

11. Produit de programme informatique comprenant un code de programme pour exécuter le procédé (400) de la revendication 10 lorsqu'il est exécuté sur un ordinateur ou un processeur.
